# EUROPÄISCHE PATENTSCHRIFT

(11) **EP 4 505 871 B1**
(45) Veröffentlichungstag und Bekanntmachung des Hinweises auf die Patenterteilung: **31.12.2025**
(21) Anmeldenummer: 24189616.6
(22) Anmeldetag: 19.07.2024
(51) Int. Cl.: A01K 37/00, A22C 21/00, A61D 1/02, A61D 3/00

(54) **VORRICHTUNG UND VERFAHREN ZUR HANDHABUNG VON GEFLÜGELTIEREN**
DEVICE AND METHOD FOR HANDLING POULTRY
APPAREIL ET PROCÉDÉ DE MANIPULATION D'ANIMAUX AVIAIRES

(30) Priorität: 21.07.2023 LU 504788
(43) Veröffentlichungstag der Anmeldung: 12.02.2025
(73) Patentinhaber: Big Dutchman International GmbH, 49377 Vechta (DE)
(72) Erfinder: Jürgens, Angelika, 26209 Hatten (DE)
(74) Vertreter: Eisenführ Speiser

(56) Entgegenhaltungen:
- WO-A1-2022/042995
- US-A- 4 758 227

## Beschreibung

Die Erfindung betrifft eine Handhabungsvorrichtung für, insbesondere lebende, Geflügeltiere, ein Verfahren zur Handhabung von, insbesondere lebenden, Geflügeltieren und die Verwendung einer Handhabungsvorrichtung.

Vorrichtungen und Verfahren zur Handhabung von lebenden Geflügeltieren (sowie gegebenenfalls zur Durchführung weiterer Handlungen) sind bekannt, beispielsweise aus WO 2017/125387 A1, WO 2015/077432 A2, FR 2885030 A1, US 10,350,041 B2 oder WO 2017/125394 A1. Aus WO 2022/042995 A1 ist eine Transportvorrichtung zum automatisierten Transportieren von lebenden Geflügeltieren bekannt, die Transportvorrichtung umfassend eine sich entlang einer Transportachse erstreckende Transportschiene mit zwei Führungselementen und einer dazwischen gebildeten Transportaufnahme und mindestens eine Mitnehmervorrichtung mit zwei Halteelementen, wobei jedes Halteelement eine Mitnehmerabschnitt und einen Aufnahmefreiraum aufweist, und einen Antrieb, der ausgebildet ist, die mindestens eine Mitnehmervorrichtung entlang der Transportschiene zu bewegen.

Existierende Lösungen haben jedoch verschiedene Nachteile. So werden die Geflügeltiere in existierenden Lösungen häufig in eine Zwangshaltung gebracht, die oft einer natürlichen Haltung der Geflügeltiere widerspricht, wie beispielsweise eine Überkopf-Position. Zudem haben die Geflügeltiere tendenziell die Neigung, sich aus einer Zwangshaltung befreien bzw. diese nicht einnehmen zu wollen. Dies führt zu Unruhe, Anspannung und Stress bei den Geflügeltieren und stellt zudem ein Verletzungsrisiko für die Geflügeltiere dar. Darüber hinaus führt dies dazu, dass bestimmte Handhabungen und/oder Handlungen an den Geflügeltieren nicht oder nur unzureichend durchgeführt werden können. Zudem ist ein hoher, meist personalintensiver, Aufwand erforderlich, um die Geflügeltiere in die entsprechende Zwangshaltung zu bringen.

Existierende Systeme, bei denen die Geflügeltiere mehr Bewegungsfreiheit haben und beispielsweise hängend transportiert werden, haben jedoch den Nachteil, dass keine klar definierte Position der Geflügeltiere vorliegt. Daher können auch hier bestimmte Handhabungen und/oder Handlungen nicht oder nur unzureichend durchgeführt werden, insbesondere, wenn dafür eine definierte Position und/oder ein, insbesondere definierter, Gegendruck erforderlich ist.

Es ist daher eine Aufgabe der vorliegenden Erfindung, eine Handhabungsvorrichtung für Geflügeltiere und ein Verfahren zur Handhabung von Geflügeltieren und die Verwendung einer Handhabungsvorrichtung anzugeben, welche einen oder mehrere der genannten Nachteile verringern. Insbesondere ist es eine Aufgabe der vorliegenden Erfindung, eine Handhabungsvorrichtung für Geflügeltiere und ein Verfahren zur Handhabung von Geflügeltieren und die Verwendung einer Handhabungsvorrichtung bereitzustellen, welche das Tierwohl verbessern und/oder eine verbesserte Handhabung und/oder verbesserte Handhabung und/oder Durchführung von Handlungen an den Geflügeltieren erlauben.

Diese Aufgabe wird gemäß einem ersten Aspekt gelöst durch eine Handhabungsvorrichtung für, insbesondere lebende, Geflügeltiere, insbesondere zur Unterstützung einer manuellen Handhabung von Geflügeltieren, umfassend eine sich zwischen einem ersten Ende und einem zweiten Ende erstreckende Führungsschiene mit zwei Führungsschenkeln, eine Geflügeltierauflage zum Auflegen des Brustbereichs eines Geflügeltieres darauf.

Die hier beschriebene Lösung ist insbesondere geeignet für lebende Geflügeltiere, und die hier beschriebene Lösung sowie deren bevorzugt Ausgestaltungen haben Vorteile insbesondere bei der Handhabung lebender Geflügeltiere, wie beispielsweise eine besonders tierschonende Handhabung mit wenig Stress für die Tiere.

Die Handhabungsvorrichtung weist eine Führungsschiene mit zwei Führungsschenkeln auf, zwischen die ein Geflügeltier an einem ersten Ende eingeführt werden kann. Das Geflügeltier kann am zweiten Ende der Führungsschiene oder wieder am ersten Ende der Führungsschiene ausgeführt werden. Die Handhabungsvorrichtung weist ferner eine Geflügeltierauflage auf, auf die der Brustbereich eines Geflügeltieres aufgelegt werden kann. Die Geflügeltierauflage ist im Betriebszustand vorzugsweise, insbesondere zumindest teilweise oder größtenteils, unterhalb der Führungsschiene angeordnet.

Die hier beschriebene Lösung dient vorzugsweise der manuellen Handhabung von Geflügeltieren, wobei insbesondere der Transport oder die Bewegung der Geflügeltiere in der und/oder durch die Handhabungsvorrichtung vorzugsweise rein manuell erfolgt.

In einer bevorzugten Ausführungsform ist vorgesehen, dass die Handhabungsvorrichtung frei ist von Transporteinrichtungen zum, insbesondere voll- oder teilautomatischen, Transport von Geflügeltieren durch die Handhabungsvorrichtung hindurch, insbesondere vom ersten Ende zum zweiten Ende, und/oder in die Handhabungsvorrichtung hinein und/oder aus der Handhabungsvorrichtung heraus. Insbesondere ist die Handhabungsvorrichtung frei von Transportelementen zum Transport der Geflügeltiere entlang einer Transportrichtung in Längsachse.

Das Freisein von Transporteinrichtungen zum, insbesondere voll- oder teilautomatischen, Transport von Geflügeltieren bedeutet insbesondere, dass der Transport der Geflügeltiere manuell erfolgt. Diese Ausgestaltung beruht insbesondere auf der Erkenntnis, dass voll- oder teilautomatische Transportlösungen zwar effizient scheinen mögen, eine manuelle Beförderung von lebenden Geflügeltieren jedoch für die Geflügeltiere deutlich schonender ist und ein menschlicher Benutzer besser als eine automatisierte Lösung auf ein unerwartetes Verhalten eines Geflügeltieres reagieren kann.

Erfindungsgemäß ist ein Aktivierungsmechanismus vorgesehen, der ausgebildet ist, insbesondere in Abhängigkeit eines Sensorsignals, eine Folge von Abstandsveränderungen zwischen der Führungsschiene und der Geflügeltierauflage zu initiieren.

Es ist ferner bevorzugt, dass der Aktivierungsmechanismus ausgebildet ist, einen Abstand zwischen der Führungsschiene und der Geflügeltierauflage von einer Funktionsposition in eine Freigabeposition zu vergrößern, insbesondere in vertikaler Richtung.

Vorzugsweise sind die Führungsschiene und die Geflügeltierauflage derart zueinander positioniert bzw. positionierbar, dass ein Geflügeltier zwischen der Führungsschiene und der Geflügeltierauflage, insbesondere in vertikaler Richtung, fixierbar oder teilfixierbar ist.

Dies bedeutet insbesondere, dass ein Geflügeltier nicht zwischen der Führungsschiene und der Geflügeltierauflage, insbesondere nicht in seitlicher Richtung, entkommen kann.

Der Abstand zwischen der Führungsschiene und der Geflügeltierauflage, insbesondere der Abstand in vertikaler Richtung, ist wichtig für eine Positionierung und (Teil-)Fixierung der Geflügeltiere zwischen der Führungsschiene und der Geflügeltierauflage. Je größer der Abstand ist, desto mehr Bewegungsfreiheit hat das Geflügeltier. Mit dem Aktivierungsmechanismus lässt sich dieser Abstand variieren, insbesondere von einer Funktionsposition, in der der Abstand kleiner ist, in eine Freigabeposition, in der der Abstand größer ist.

Vorzugsweise ist der Aktivierungsmechanismus ausgebildet, den Abstand zwischen der Führungsschiene und der Geflügeltierauflage ausschließlich in vertikaler Richtung zu verändern. Dies dient einer besonders einfachen und robusten Ausführung.

Es kann ebenfalls bevorzugt sein, dass der Aktivierungsmechanismus einen Sensor aufweist und ausgebildet ist, in Abhängigkeit des Sensorsignals die Vergrößerung und/oder die Verkleinerung des Abstands zwischen der Führungsschiene und der Geflügeltierauflage zu initiieren. Vorzugsweise kann ein Sensor vorgesehen sein, der vorzugsweise ausgebildet ist, die Position eines Geflügeltieres entlang der Führungsschiene zu detektieren. Vorzugsweise kann der Abstand zwischen der Führungsschiene und der Geflügeltierauflage in Abhängigkeit von einem Sensorsignal des Sensors variiert werden und/oder eine Folge von Abstandsänderungen initiiert werden.

Vorzugsweise beträgt ein Abstand zwischen dem ersten Ende und dem zweiten Ende maximal 2m, insbesondere maximal 1,80m, insbesondere maximal 1,70m, insbesondere maximal 1,60m, insbesondere maximal 1,50m, insbesondere maximal 1,40m, insbesondere maximal 1,30m, insbesondere maximal 1,20m, insbesondere maximal 1,10m, insbesondere maximal 1,00m. Ferner vorzugsweise beträgt eine Grundfläche der Handhabungsvorrichtung maximal 1,80m x 1 ,00m. Ferner vorzugsweise beträgt eine Höhe der Handhabungsvorrichtung, insbesondere des ersten Endes und/oder des zweiten Endes, mindestens 0,50m, insbesondere mindestens 0,60m, insbesondere mindestens 0,70m, insbesondere mindestens 0,80m, insbesondere mindestens 0,90m, insbesondere mindestens 1,00m, insbesondere mindestens 1,10m, und/oder maximal 1,50m, insbesondere maximal 1,40m, insbesondere maximal 1,30m, insbesondere maximal 1,20m, insbesondere maximal 1,10, insbesondere maximal 1,00m.

Diese Abmessungen sind insbesondere bevorzugt, da hierbei die Handhabungsvorrichtung von einer Person bedient werden kann, wobei insbesondere die Handhabungsvorrichtung ausgebildet ist, dass eine Person ein Geflügeltier manuell in die Führungsschiene einführen und ausführen kann, vorzugsweise ohne ihren Standpunkt zu wechseln.

In einer bevorzugten Ausführungsform ist vorgesehen, dass der Aktivierungsmechanismus ausgebildet ist, einen Abstand zwischen der Führungsschiene und der Geflügeltierauflage von einer Einführposition in die Funktionsposition zu verkleinern.

Eine bevorzugte Weiterbildung zeichnet sich dadurch aus, dass der Aktivierungsmechanismus ausgebildet ist, einen Abstand zwischen der Führungsschiene und der Geflügeltierauflage von einer Freigabeposition in die Funktionsposition und/oder in die Einführposition zu verkleinern.

Vorzugsweise ist der Abstand zwischen der Führungsschiene und der Geflügeltierauflage zwischen verschiedenen Positionen variierbar. Besonders bevorzugt sind hier eine Funktionsposition, in der der Abstand am kleinsten ist, und eine Freigabeposition, in der der Abstand am größten ist, und eine Einführposition, deren Abstand zwischen dem der Funktionsposition und der Freigabeposition liegt.

Gemäß einer bevorzugten Ausführungsform ist vorgesehen, dass die Handhabungsvorrichtung eine erste Funktionsvorrichtung und vorzugsweise eine zweite Funktionsvorrichtung aufweist.

Mit solchen Funktionsvorrichtungen können vorzugsweise Handlungen am Geflügeltier vorgenommen werden, insbesondere in der Funktionsposition.

In einer weiteren bevorzugten Ausführungsform ist vorgesehen, dass der Aktivierungsmechanismus ausgebildet ist, insbesondere in Abhängigkeit des Sensorsignals, mindestens eine Abstandsveränderung zwischen der Führungsschiene und der Geflügeltierauflage zu initiieren und mindestens die erste und/oder die zweite Funktionsvorrichtung zu aktivieren. Der Aktivierungsmechanismus kann also vorzugsweise nicht nur die Abstandsveränderung initiieren und/oder vornehmen, sondern vorzugsweise bei oder nach Erreichen der Funktionsposition auch eine oder mehrere oder alle Funktionsvorrichtungen aktivieren, gleichzeitig oder nacheinander.

Eine weitere bevorzugte Fortbildung zeichnet sich dadurch aus, dass die Handhabungsvorrichtung und/oder die erste Funktionsvorrichtung und/oder die zweite Funktionsvorrichtung eine Substanz-Bereitstellungsvorrichtung umfassen. Die ist insbesondere vorteilhaft, wenn durch die Funktionsvorrichtung(en) eine oder mehrere Substanzen verwendet, beispielsweise verabreicht oder aufgebracht, werden sollen.

Dabei ist insbesondere bevorzugt, dass die erste Funktionsvorrichtung und/oderdie zweite Funktionsvorrichtung und/oder die Substanz-Bereitstellungsvorrichtung als modulare Austauscheinheit, insbesondere Einwegeinheit, ausgebildet ist bzw. sind. Ein Austauschen der ersten Funktionsvorrichtung und/oder einer zweiten Funktionsvorrichtung und/oder einer Substanz-Bereitstellungsvorrichtung ist insbesondere bevorzugt nach der Handhabung einer Vielzahl von Geflügeltieren, insbesondere einer Geflügelstallpopulation oder einer Geflügelstallteilpopulation. Auf diese Weise kann Hygiene- und Sicherheitsanforderungen, beispielsweise zur Prävention der Ausbreitung von Krankheiten, besonders effizient begegnet werden.

Ferner ist vorzugsweise vorgesehen, dass die Führungsschiene im Wesentlichen horizontal ausgerichtet ist. Ferner ist bevorzugt, dass die zwei Führungsschenkel gegenüberliegend angeordnet sind. Ferner ist bevorzugt, dass zwischen den zwei Führungsschenkeln eine Geflügeltieraufnahme gebildet ist.

Eine weitere bevorzugte Weiterbildung sieht vor, dass die Geflügeltierauflage geflügeltier-ergonomisch geformt ist und/oder einer Vertiefung darin aufweist und/oder einen Brustanschlag aufweist.

Diese Ausgestaltungen dienen insbesondere dazu, dass ein Geflügeltier besonders schonend und sicher zwischen die Führungsschenkel eingeführt werden kann und besonders schonend und sicher zwischen der Führungsschiene und der Geflügeltierauflage positioniert und (teil-)fixiert werden kann.

Ferner ist bevorzugt, dass die Geflügeltierauflage beweglich, insbesondere in vertikaler Richtung, beweglich zur Führungsschiene angeordnet ist, wobei vorzugsweise die Geflügeltierauflage ausschließlich in vertikaler Richtung beweglich zur Führungsschiene angeordnet ist. Dies dient einer effizienten und robusten Ausgestaltung.

In einer weiteren bevorzugten Ausführungsform ist vorgesehen, dass die Führungsschenkel an einem ersten Ende der Führungsschiene aufgeweitet und/oder abgeflacht und/oder abgerundet sind. Auch diese Ausgestaltungen dient insbesondere dazu, dass ein Geflügeltier besonders schonend und sicher zwischen die Führungsschenkel eingeführt werden kann.

Insbesondere ist bevorzugt, dass die Führungsschenkel an einem zweiten Ende der Führungsschiene einen Anschlag, insbesondere für die Hand eines Benutzers, aufweisen. Dies hat den Vorteil, dass ein Benutzer erkennen kann, wie weit ein Geflügeltier einzuführen ist. Vorzugsweise ist der Sensor des Aktivierungsmechanismus ausgebildet, die Position der Hand eines Benutzers am Anschlag zu detektieren oder die Position des Geflügeltieres, wenn die Hand eines Benutzers den Anschlag erreicht, um dann vorzugsweise die Funktionsposition und ggf. Funktionsvorrichtung(en) zu aktivieren.

Ferner ist bevorzugt, dass zwischen den Führungsschenkeln und/oder in der Geflügeltieraufnahme ein, vorzugsweise flexibler, Niederhalter angeordnet ist. Dieser Niederhalter kann dazu dienen, dass das Geflügeltier eine bestimmte Körperhaltung, insbesondere Kopfhaltung einnimmt. Dies kann vorteilhaft sein für bestimmte Handhabungen. Insbesondere ist es vorteilhaft, wenn der Niederhalter an der Position der zweiten Funktionsvorrichtung angeordnet ist. Der Niederhalter kann beispielsweise als Gummilippe, Bürste und/oder Fadenvorhang ausgebildet sein.

In einer weiteren bevorzugten Ausführungsform ist vorgesehen, dass Handhabungsvorrichtung ein mobiles Chassis aufweist, insbesondere ein Chassis mit Rollen, vorzugsweise mindestens zwei Rollen, insbesondere mindestens drei Rollen, vorzugsweise genau vier Rollen. Dies ermöglicht einfaches Verbringen der Handhabungsvorrichtung in verschiedene Ställe und Stallteile. Das Chassis kann einen Antrieb aufweisen, um die Handhabungsvorrichtung fortzubewegen zwischen verschiedenen Einsatzorten. Das Chassis kann eine Brems- und/oder Arretiervorrichtung aufweisen.

Vorzugsweise sind wesentliche Elemente der Handhabungsvorrichtung, insbesondere die Führungsschiene und/oder die Funktionsvorrichtung(en) und/oder der Aktivierungsmechanismus und/oder die Substanzbereitstellungsvorrichtung(en) innerhalb des Chassis angeordnet, insbesondere seitlich innerhalb des Chassis und/oder lateral nicht hervorstehend.

In einer weiteren bevorzugten Ausführungsform ist vorgesehen, dass Handhabungsvorrichtung einen zusätzlichen Aufbau für eine Flügelimpfung aufweist, der eine Antriebsmechanik aufweist, die ausgebildet ist, um eine Nadel Vor- und Zurückzubewegen, insbesondere innerhalb einer horizontal ausgerichteten Ebene. Vorzugsweise umfasst dieser zusätzliche Aufbau zwei Abschnitte, nämlich einen ersten Abschnitt und einen zweiten. Vorzugsweise weist der erste Abschnitt des zusätzlichen Aufbaus eine Antriebsmechanik auf, die ausgebildet ist, um eine Nadel Vor- und Zurückzubewegen, insbesondere innerhalb einer horizontal ausgerichteten Ebene. Vorzugsweise kann eine solche Nadel von hinten in ein Rohr der Antriebsmechanik geschoben und an diesem arretiert werden. Das Rohr wird vorzugsweise durch einen Kurbeltrieb bewegt und ist vorzugsweise nach außen abgedichtet, sodass ein Eindringen von Dreck in die Antriebsmechanik vermieden werden kann. Vorzugsweise kann an die Antriebsmechanik eine Patrone, vorzugsweise aus Kunststoff, befestigt werden, an welcher beispielsweise ein Impfmittel aufgesteckt werden kann. Ein solches Impfmittel ist vorzugsweise durch die Patrone zusätzlich aus einem Hand-Bereich eines Bedieners entfernt, sodass eine verbesserte Sicherheit des Bedieners erreicht werden kann. Vorzugsweise fließt das Impfmittel innerhalb der Patrone über einen Kanal zur Spitze einer Nadel und benetzt diese. Vorzugsweise kann auf der gegenüberliegenden Seite der Nadel ein weiteres Rohr, das vorzugsweise im Bereich des zweiten Abschnitts angeordnet ist, ausgefahren werden, wobei dieses weitere Rohr vorzugsweise einen Gegendruckpunkt zur Nadel bilden kann, damit eine Flügelspannhaut des Geflügeltiers leichter durchstochen werden kann. Der gesamte Aufbau der Flügelimpfung lässt sich vorzugsweise entlang der Einführrichtung des Geflügeltiers verschieben. Somit lässt sich vorzugsweise die Nadelposition auf besonders vorteilhafte Weise an die Anatomie des individuellen Geflügeltiers anpassen.

Eine weitere bevorzugte Weiterbildung sieht vor, die erste Funktionsvorrichtung eine, vorzugsweise höhenverstellbare Nadelanordnung umfasst, die vorzugsweise mindestens zwei Nadelgeber für jeweils eine, zwei oder mehrere Nadeln umfasst. Vorzugsweise sind die Nadelgeber symmetrisch zu einer Längsachse angeordnet und/oder in einem Winkel zur Vertikalen und/oder einer vertikalen, die Längsachse umfassenden Ebene von mindestens 15 Grad und/oder maximal 25 Grad angeordnet.

Mit einer solchen Nadelanordnung kann in vorteilhafter Weise eine Brustimpfung von Geflügeltieren mit einer Impfsubstanz durchgeführt werden.

In einer weiteren bevorzugten Ausführungsform ist vorgesehen, dass die zweite Funktionsvorrichtung eine, vorzugsweise im Wesentlichen horizontal angeordnete Nadel aufweist. Die Nadel ist vorzugsweise an der Führungsschiene, insbesondere an einem der zwei Führungsschenkel, angeordnet. Die Nadel ist ferner vorzugsweise angeordnet, die Haut eines auf Geflügeltierauflageaufgelegten Geflügeltieres, insbesondere im Bereich der Flügelinnenseite, zu punktieren. Ferner vorzugsweise ist die Nadel vorzugsweise oberhalb des flexiblen Niederhalters angeordnet. Mit der zweiten Funktionsvorrichtung kann vorzugsweise eine Pockenimpfung der Geflügeltiere mit einem Pockenimpfstoff durchgeführt werden.

Gemäß einem weiteren Aspekt der Erfindung wird die eingangs genannte Aufgabe gelöst durch ein Verfahren zur, insbesondere manuellen, Handhabung von, insbesondere lebenden, Geflügeltieren, vorzugsweise in einer Handhabungsvorrichtung, insbesondere in einer zuvor beschriebenen Handhabungsvorrichtung. Das Verfahren umfasst: Einführen eines Geflügeltieres zwischen zwei Führungsschenkel einer Führungsschiene und Auflegen des Brustbereichs des Geflügeltieres auf eine Geflügeltierauflage, Vergrößern eines Abstands zwischen der Führungsschiene und der Geflügeltierauflage von einer Funktionsposition in eine Freigabeposition, insbesondere in vertikaler Richtung, vorzugsweise mittels eines Aktivierungsmechanismus.

Das Verfahren ist vorzugsweise ferner dadurch gekennzeichnet, dass beim Einführen des Geflügeltieres zwischen zwei Führungsschenkel einer Führungsschiene der Abstand zwischen der Führungsschiene und der Geflügeltierauflage einer Einführposition entspricht, und der Abstand zwischen der Führungsschiene und der Geflügeltierauflage nach dem Einführen des Geflügeltieres von der Einführposition auf die Funktionsposition verkleinert wird, insbesondere in Abhängigkeit eines Sensorsignals.

Das Verfahren ist vorzugsweise ferner dadurch gekennzeichnet, dass vor dem Vergrößern des Abstands zwischen der Führungsschiene und der Geflügeltierauflage von der Funktionsposition in die Freigabeposition mindestens eine erste Funktionsvorrichtung aktiviert wird.

Das Verfahren ist ferner vorzugsweise gekennzeichnet durch Austauschen der ersten Funktionsvorrichtung und/oder einer zweiten Funktionsvorrichtung und/oder einer Substanz-Bereitstellungsvorrichtung nach der Handhabung einer Vielzahl von Geflügeltieren, insbesondere einer Geflügelstallpopulation oder einer Geflügelstallteilpopulation, vorzugsweise als modulare Austauscheinheit, insbesondere Einwegeinheit.

Gemäß einem weiteren Aspekt der Erfindung wird die eingangs genannte Aufgabe gelöst durch die Verwendung einer zuvor beschriebenen Handhabungsvorrichtung zur Handhabung von, insbesondere lebenden, Geflügeltieren, vorzugsweise in oder vor einem Geflügelstall und/oder in einem zuvor beschriebenen Verfahren.

Hinsichtlich der Vorteile, bevorzugten Ausführungsformen und Details der einzelnen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Weitere vorteilhafte Ausführungsformen ergeben sich aus der Kombination einzelner, mehrerer oder aller der hier beschriebenen bevorzugten Merkmale.

Bevorzugte Ausführungsbeispiele werden beispielhaft anhand der beiliegenden Figuren beschrieben. Es zeigen:
- Figur 1:: eine schematische dreidimensionale Darstellung einer beispielhaften Handhabungsvorrichtung;
- Figur 2:: eine Seitenansicht der Handhabungsvorrichtung nach Fig. 1 in einer Einführposition;
- Figur 3:: eine Vorderansicht der Handhabungsvorrichtung nach Fig. 1 in der Einführposition;
- Figur 4:: eine Seitenansicht der Handhabungsvorrichtung nach Fig. 1 in einer Funktionsposition mit eingefahrenen Funktionsvorrichtungen;
- Figur 5:: eine Vorderansicht der Handhabungsvorrichtung nach Fig. 1 in der Funktionsposition mit eingefahrenen Funktionsvorrichtungen;
- Figur 6:: eine Seitenansicht der Handhabungsvorrichtung nach Fig. 1 in der Funktionsposition mit ausgefahrenen Funktionsvorrichtungen;
- Figur 7:: eine Vorderansicht der Handhabungsvorrichtung nach Fig. 1 in der Funktionsposition mit ausgefahrenen Funktionsvorrichtungen;
- Figur 8:: eine Seitenansicht der Handhabungsvorrichtung nach Fig. 1 in einer Freigabeposition;
- Figur 9:: eine Vorderansicht der Handhabungsvorrichtung nach Fig. 1 in der Freigabeposition;
- Figur 10:: eine schematische Darstellung eines beispielhaften Verfahrens zur, insbesondere manuellen, Handhabung von Geflügeltieren;
- Figur 11:: eine schematische Darstellung eines Aufbaus für eine Flügelimpfung.

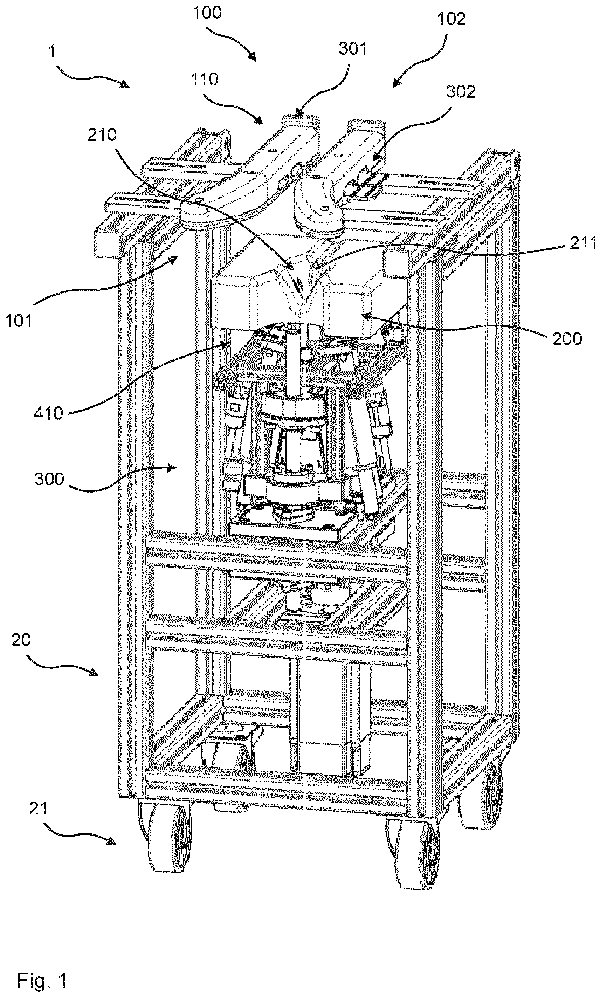

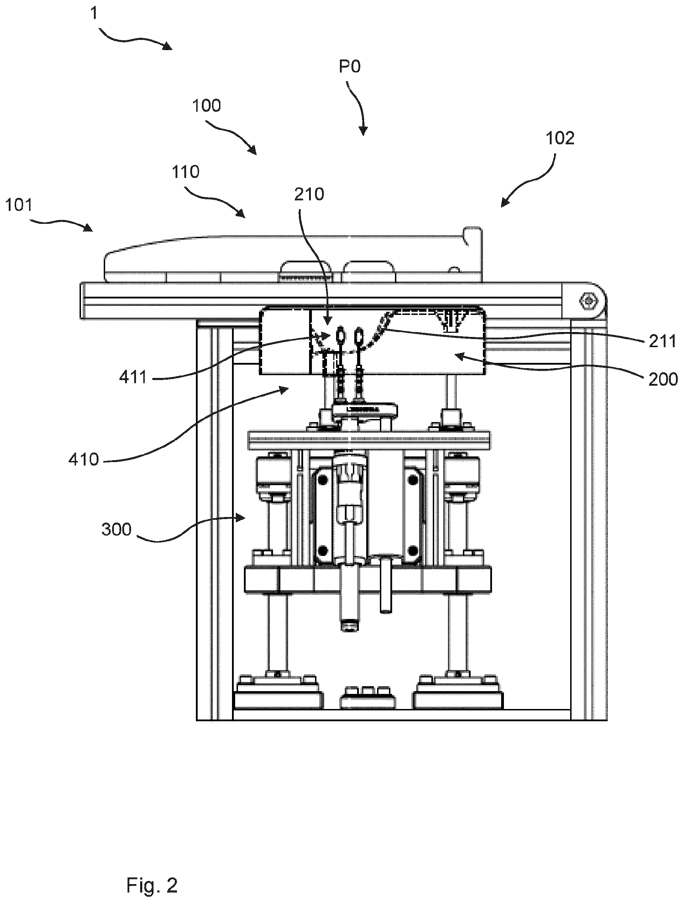

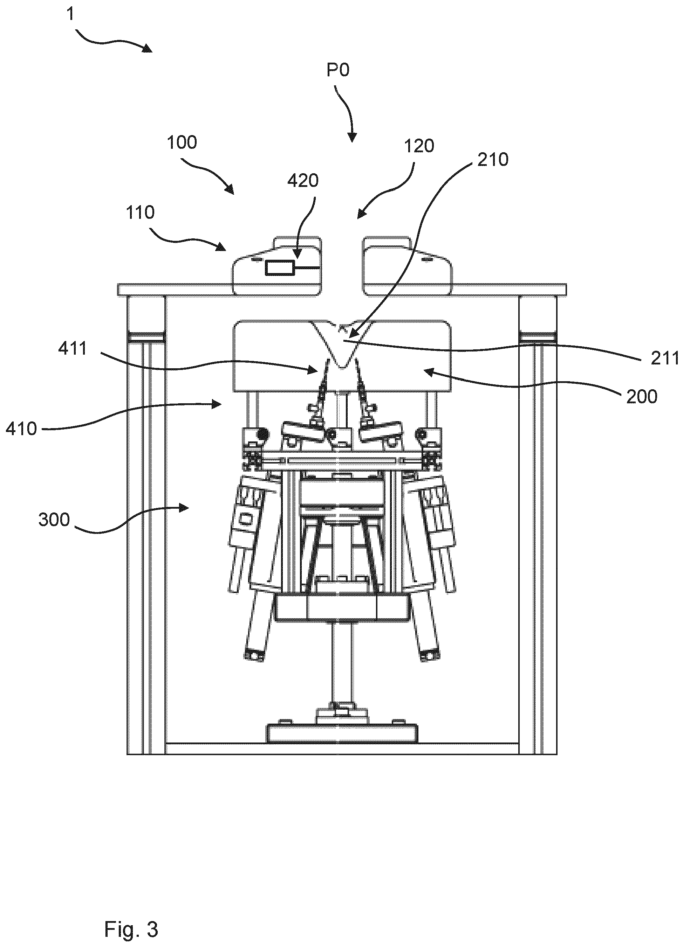

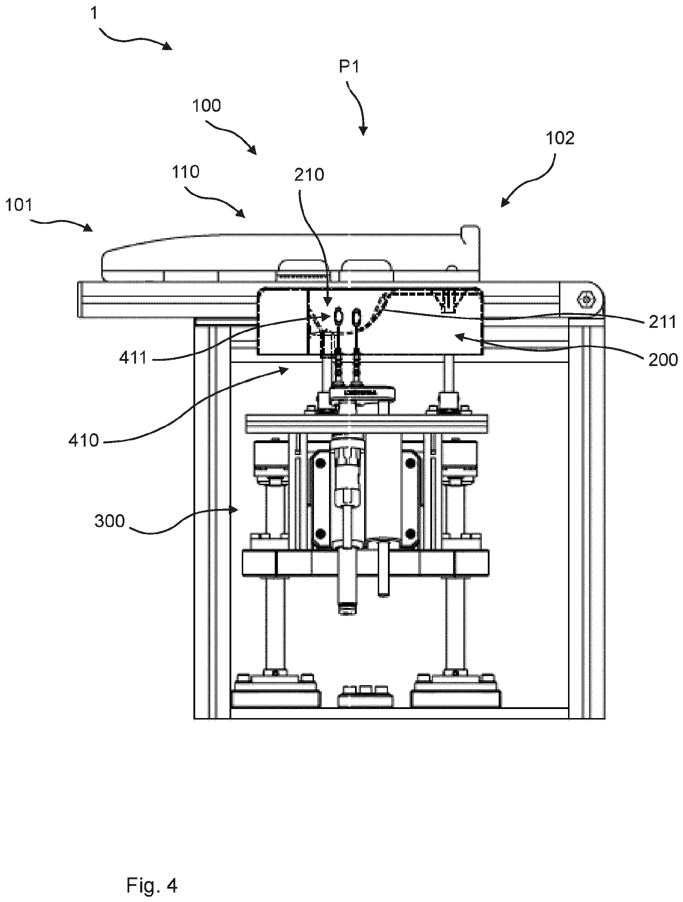

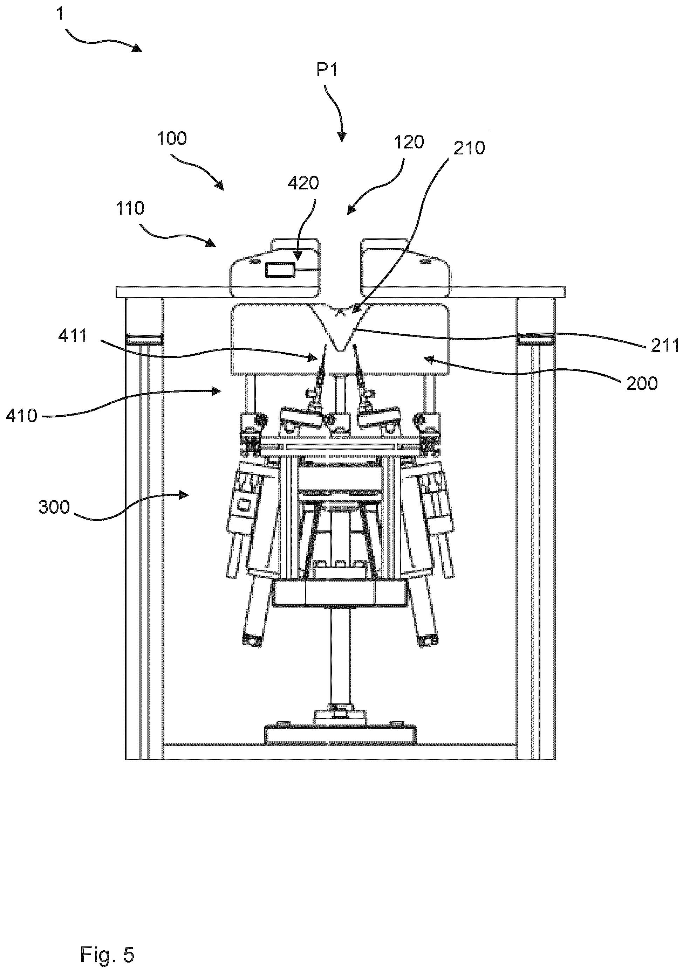

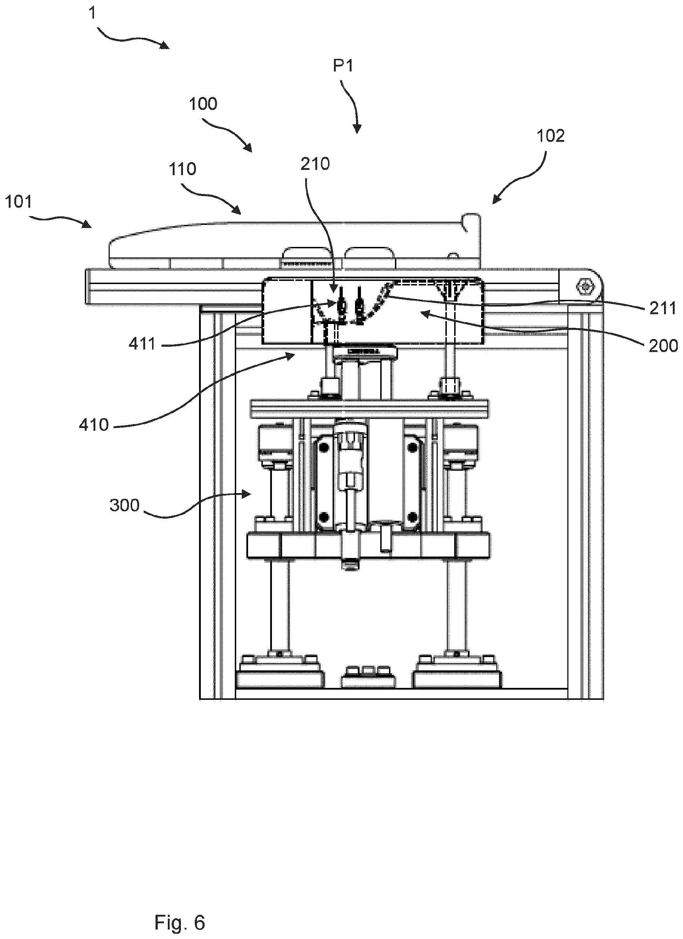

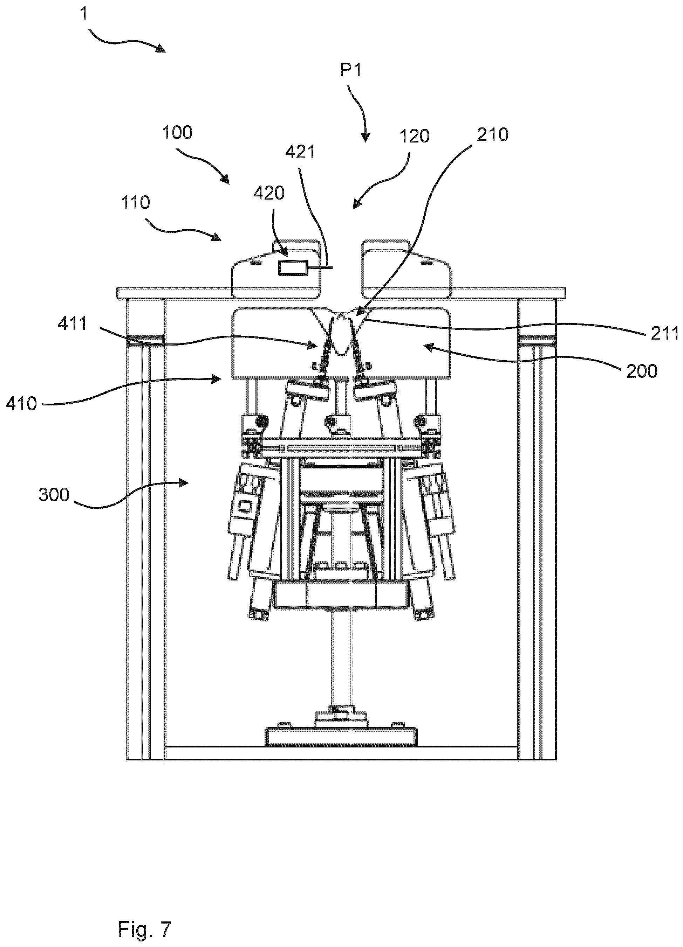

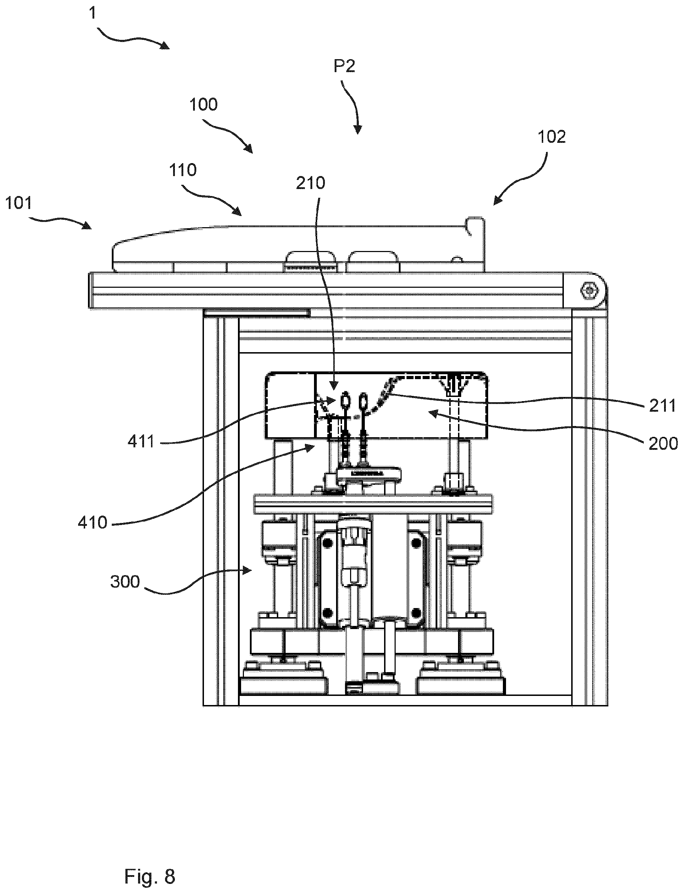

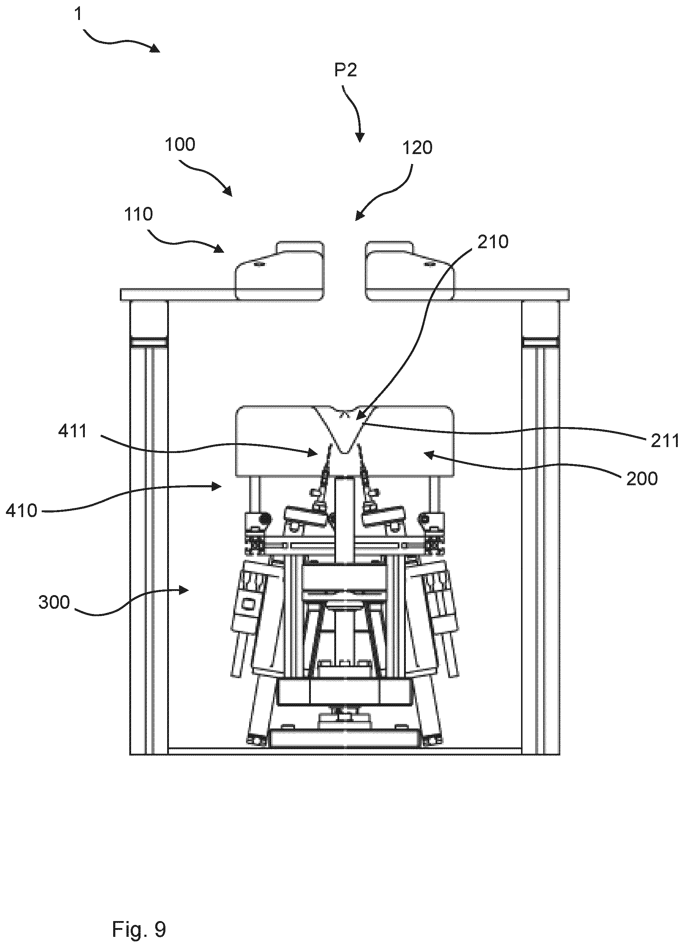

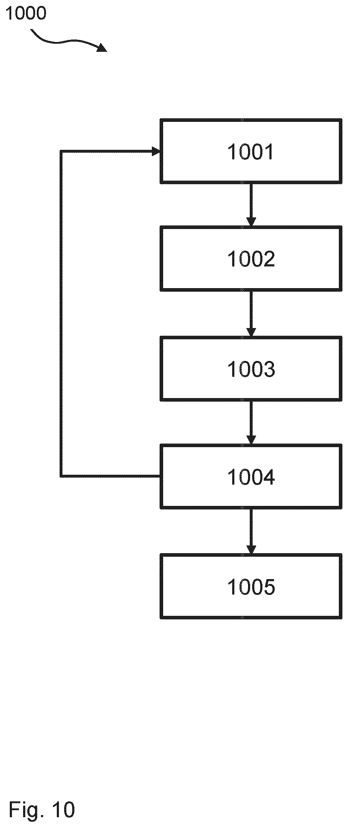

Fig. 1 zeigt eine schematische dreidimensionale Darstellung einer beispielhaften Handhabungsvorrichtung 1. Die Fig. 2 und 3 zeigen die Handhabungsvorrichtung nach Fig. 1 in der Einführposition P0, die Fig. 4 und 5 die Handhabungsvorrichtung nach Fig. 1 in der Funktionsposition P1 mit eingefahrenen Funktionsvorrichtungen 410, 420, die Fig. 6 und 7 die Handhabungsvorrichtung nach Fig. 1 in der Funktionsposition P1 mit ausgefahrenen Funktionsvorrichtungen 410, 420, und die Fig. 8 und 9 die Handhabungsvorrichtung nach Fig. 1 in der Freigabeposition P2. Fig. 10 zeigt eine schematische Darstellung eines beispielhaften Verfahrens zur, insbesondere manuellen, Handhabung von Geflügeltieren.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

Handhabungsvorrichtung 1 umfasst eine sich zwischen einem ersten Ende 101 und einem zweiten Ende 102 erstreckende Führungsschiene 100 mit zwei Führungsschenkeln 110 und eine Geflügeltierauflage 200 zum Auflegen des Brustbereichs eines Geflügeltieres darauf.

Die Führungsschiene 100 ist im Wesentlichen horizontal ausgerichtet, und die zwei Führungsschenkel 110 sind gegenüberliegend angeordnet. Zwischen den zwei Führungsschenkeln 110 ist eine Geflügeltieraufnahme 120 gebildet. Die Führungsschenkel 110 sind an einem ersten Ende 101 der Führungsschiene 100 aufgeweitet und/oder abgeflacht und abgerundet.

Die Handhabungsvorrichtung 1 ist frei von Transporteinrichtungen zum, insbesondere voll- oder teilautomatischen, Transport von Geflügeltieren durch die Handhabungsvorrichtung 1 hindurch, insbesondere vom ersten Ende 101 zum zweiten Ende 102 und/oder in die Handhabungsvorrichtung 1 hinein und/oder aus der Handhabungsvorrichtung 1 heraus.

Ein Benutzer greift ein Geflügeltier und den Flügeln und führt dieses zwischen die Führungsschenkel 110 vom ersten Ende 101 her in die Handhabungsvorrichtung 1 ein, so dass der Brustbereich des Geflügeltieres in einer Vertiefung 210 auf der ergonomisch geformten Geflügeltierauflage 200 zum Aufliegen kommt. Hierbei wird das Geflügeltier eingeführt, bis die Hand des Benutzers den Anschlag 301 am zweiten Ende 102 der Führungsschienen 110 erreicht und das Brustbein des Geflügeltieres am Brustanschlag 211 anliegt.

Die Geflügeltierauflage 200 ist in vertikaler Richtung, insbesondere ausschließlich in vertikaler Richtung, beweglich zur Führungsschiene 100 angeordnet. Die Handhabungsvorrichtung 1 weist ferner einen Aktivierungsmechanismus 300 auf, der ausgebildet ist, einen Abstand zwischen der Führungsschiene 100 und der Geflügeltierauflage 200 insbesondere in vertikaler Richtung zu verändern. Der Aktivierungsmechanismus 300 ist insbesondere ausgebildet, eine Folge von Abstandsveränderungen zwischen der Führungsschiene 100 und der Geflügeltierauflage 200 zu initiieren.

Der Aktivierungsmechanismus 300 ist ausgebildet, den Abstand zwischen der Führungsschiene 100 und der Geflügeltierauflage 200 von einer Einführposition P0 (in den Fig. 2 und 3 gezeigt) in eine Funktionsposition P1 (in den Fig. 4 bis 7 gezeigt) zu verkleinern und dann in eine Freigabeposition P2 (in den Fig. 8 und 9 gezeigt) zu vergrößern. Da der Abstand in der Freigabeposition P2 größer ist als in der Einführposition P0, kann der Aktivierungsmechanismus 300 den Abstand von der Freigabeposition P2 wieder in die Einführposition P0 verkleinern, nachdem das Geflügeltier freigegeben wurde, um die Handhabungsvorrichtung 1 bereit zu machen für das Einführen des nächsten Geflügeltieres.

Der Aktivierungsmechanismus 300 weist einen Sensor 302 auf und ist ausgebildet, die Vergrößerung und/oder die Verkleinerung des Abstands zwischen der Führungsschiene 100 und der Geflügeltierauflage 200 in Abhängigkeit des Sensorsignals zu initiieren. Der Sensor 302 ist vorzugsweise angeordnet und ausgebildet, die Position der Hand eines Benutzers am Anschlag 301 und/oder die Position eines Geflügeltieres am Brustanschlag 211 zu detektieren und vorzugsweise dann ein Sensorsignal zu generieren, insbesondere um Abstand zwischen der Führungsschiene 100 und der Geflügeltierauflage 200 von einer Einführposition P0 in die Funktionsposition P1 zu verkleinern.

Die Handhabungsvorrichtung 1 weist ferner eine erste Funktionsvorrichtung 410 und vorzugsweise eine zweite Funktionsvorrichtung 420 auf. Ferner kann die Handhabungsvorrichtung 1 eine Substanz-Bereitstellungsvorrichtung umfassen, die insbesondere ausgebildet sein kann, eine oder mehrere Substanzen an die erste Funktionsvorrichtung 410 und/oder eine zweite Funktionsvorrichtung 420 bereitzustellen.

Der Aktivierungsmechanismus 300 ist vorzugsweise ausgebildet, insbesondere in Abhängigkeit des Sensorsignals, nicht nur die mindestens eine Abstandsveränderung zwischen der Führungsschiene 100 und der Geflügeltierauflage 200 zu initiieren, sondern auch mindestens die erste Funktionsvorrichtung 410 zu aktivieren.

Die erste Funktionsvorrichtung 410 umfasst eine höhenverstellbare Nadelanordnung 411, die zwei Nadelgeber für jeweils eine, zwei oder mehrere Nadeln umfasst. Die Nadelgeber vorzugsweise symmetrisch zu einer Längsachse angeordnet und in einem Winkel zur Vertikalen angeordnet.

Die zweite Funktionsvorrichtung 420 weist eine im Wesentlichen horizontal angeordnete Nadel 421 auf, wobei die Nadel 421 an der Führungsschiene 100, insbesondere an einem der zwei Führungsschenkel 110, angeordnet ist. Die Nadel 421 ist angeordnet, die Haut eines auf Geflügeltierauflage 200 aufgelegten Geflügeltieres, insbesondere im Bereich der Flügelinnenseite, zu punktieren.

Die erste Funktionsvorrichtung 410 und/oder die zweite Funktionsvorrichtung 420 und/oder die Substanz-Bereitstellungsvorrichtung ist bzw. sind vorzugsweise als modulare Austauscheinheit, insbesondere Einwegeinheit, ausgebildet. Dies hat den Vorteil, dass nach der Impfung einer Geflügeltier-(teil-)Population diese Einheiten ausgetauscht werden können, um Hygiene-, Sicherheits- und Gesundheitsanforderungen zu entsprechen und besonders der Verbreitung von Krankheiten entgegenwirken zu können.

Die Handhabungsvorrichtung 1 weist ferner ein mobiles Chassis 20 Chassis mit vier Rollen 21 auf. Die Geflügeltierauflage 200 sowie die noch zu beschreibende erste Funktionsvorrichtung 410 und der ebenfalls noch zu beschreibende Aktivierungsmechanismus 300 sind innerhalb des Chassis angeordnet, insbesondere seitlich innerhalb des Chassis und lateral nicht hervorstehend.

Die Handhabungsvorrichtung 1 wird vorzugsweise im schematisch in Fig. 10 dargestellten beispielhaften Verfahren 1000 zur insbesondere manuellen Handhabung von Geflügeltieren eingesetzt. Hierzu wird in einem ersten Schritt 1001 ein Geflügeltier in der Einführposition P0 der Handhabungsvorrichtung 1 zwischen zwei Führungsschenkel 110 der Führungsschiene 100 eingeführt und der Brustbereich des Geflügeltieres auf eine Geflügeltierauflage 200 aufgelegt. Wenn die Hand des Benutzers den Anschlag 301 erreicht und/oder wenn das Geflügeltier den Brustbeinanschlag 211 erreicht, sendet im Schritt 1002 der Sensor 302 ein Signal und der Aktivierungsmechanismus 300 verringert den Abstand zwischen der Führungsschiene 100 und der Geflügeltierauflage 200 von der Einführposition P0 in die Funktionsposition P1 und aktiviert vorzugsweise zudem die erste und zweite Funktionsvorrichtungen 410, 420.

Anschließend wird im Schritt 1003 der Abstand zwischen der Führungsschiene 100 und der Geflügeltierauflage 200 von der Funktionsposition P1 in die Freigabeposition P2 mittels des Aktivierungsmechanismus 300 vergrößert und das Geflügeltier freigegeben.

Anschließend wird im Schritt 1004 der Abstand zwischen der Führungsschiene 100 und der Geflügeltierauflage 200 von der Freigabeposition P2 wieder in die Einführposition P0 mittels des Aktivierungsmechanismus 300 verkleinert und die Handhabungsvorrichtung 1 ist bereit für das Einführen des nächsten Geflügeltieres in einer Wiederholung von Schritt 1001. Um den Schritt 1004 auszulösen, kann vorzugsweise eine Lichtschranke als Sensor genutzt werden.

Nach der Handhabung einer Vielzahl von Geflügeltieren, insbesondere einer Geflügelstallpopulation oder einer Geflügelstallteilpopulation, können in einem Schritt 1005 die erste Funktionsvorrichtung 410 und/oder die zweite Funktionsvorrichtung 420 und/oder die Substanz-Bereitstellungsvorrichtung(en) ausgetauscht werden, vorzugsweise als modulare Austauscheinheit, insbesondere Einwegeinheit(en).

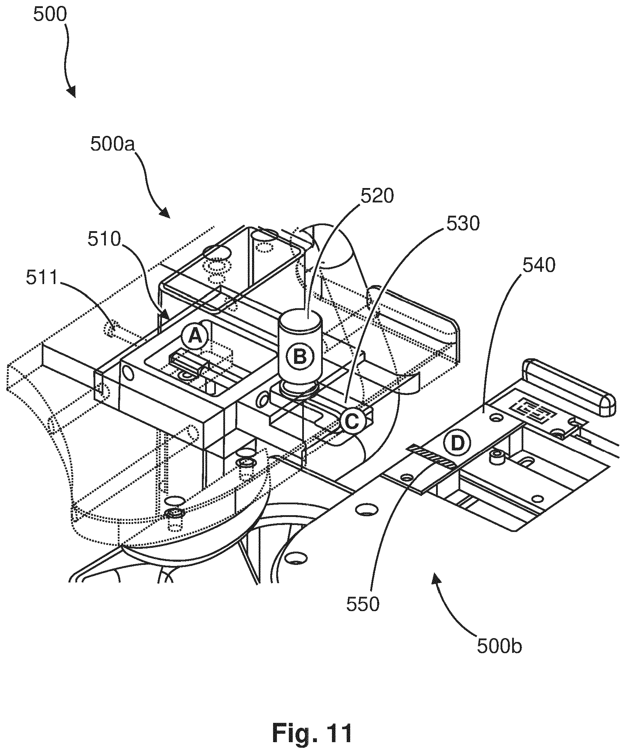

Fig. 11 zeigt einen zusätzlichen Aufbau 500 für eine wie hier beschriebene Handhabungsvorrichtung für Geflügeltiere. Dieser zusätzliche Aufbau 500 kann insbesondere in eine solche Handhabungsvorrichtung integriert werden und/oder neben einer solchen Handhabungsvorrichtung angeordnet werden. Dieser zusätzliche Aufbau 500 ist ein Aufbau für eine Flügelimpfung, beispielsweise eine Pockenimpfung. Der Aufbau 500 für eine Flügelimpfung umfasst zwei Abschnitte, nämlich einen ersten Abschnitt 500a und einen zweiten Abschnitt 500b. Der erste Abschnitt 500a des Aufbaus 500 weist eine Antriebsmechanik 510 auf, die ausgebildet ist, um eine Nadel Vor- und Zurückzubewegen, insbesondere innerhalb einer horizontal ausgerichteten Ebene. Eine solche Nadel kann von hinten in ein Rohr 511 der Mechanik geschoben und an diesem arretiert werden. Das Rohr 511 wird vorzugsweise durch einen Kurbeltrieb bewegt und ist vorzugsweise nach außen hin abgedichtet, sodass ein Eindringen von Dreck in die Antriebsmechanik 510 vermieden werden kann. An die Antriebsmechanik 510 kann eine Patrone 530, vorzugsweise aus Kunststoff, befestigt werden, an welcher dann ein Impfmittel 520 aufgesteckt werden kann. Das Impfmittel 520 ist durch diese Patrone 530 zusätzlich aus dem Hand-Bereich des Bedieners entfernt, sodass eine verbesserte Sicherheit des Bedieners erreicht werden kann. Das Impfmittel 520 fließt innerhalb der Patrone 530 über einen Kanal zur Spitze einer Nadel und benetzt diese. Vorzugsweise kann auf der gegenüberliegenden Seite der Nadel ein weiteres Rohr 550, das im Bereich des Abschnitts 540 angeordnet ist, ausgefahren werden, wobei dieses weitere Rohr 550 einen Gegendruckpunkt zur Nadel bilden kann, damit die Flügelspannhaut des Geflügeltiers leichter durchstochen werden kann. Der gesamte Aufbau 500 der Flügelimpfung lässt sich vorzugsweise entlang der Einführrichtung des Geflügeltiers verschieben. Somit lässt sich die Nadelposition auf besonders bevorzugte Weise an die Anatomie des individuellen Geflügeltiers anpassen.

## Patentansprüche

1. Handhabungsvorrichtung (1) für Geflügeltiere, insbesondere zur Unterstützung einer manuellen Handhabung von Geflügeltieren, umfassend
- eine sich zwischen einem ersten Ende (101) und einem zweiten Ende (102) erstreckende Führungsschiene (100) mit zwei Führungsschenkeln (110),
- eine Geflügeltierauflage (200) zum Auflegen des Brustbereichs eines Geflügeltieres darauf,
**gekennzeichnet durch** einen Aktivierungsmechanismus (300), der ausgebildet ist, insbesondere in Abhängigkeit eines Sensorsignals, eine Folge von Abstandsveränderungen zwischen der Führungsschiene (100) und der Geflügeltierauflage (200) zu initiieren.

2. Handhabungsvorrichtung (1) nach dem vorhergehenden Anspruch, **dadurch gekennzeichnet, dass**
- die Handhabungsvorrichtung (1) frei ist von Transporteinrichtungen zum, insbesondere voll- oder teilautomatischen, Transport von Geflügeltieren durch die Handhabungsvorrichtung (1) hindurch, insbesondere vom ersten Ende (101) zum zweiten Ende (102) und/oder in die Handhabungsvorrichtung (1) hinein und/oder aus der Handhabungsvorrichtung (1) heraus.

3. Handhabungsvorrichtung (1) nach mindestens einem der vorhergehenden Ansprüche, **dadurch gekennzeichnet, dass**
- der Aktivierungsmechanismus (300) ausgebildet ist, einen Abstand zwischen der Führungsschiene (100) und der Geflügeltierauflage (200) von einer Funktionsposition (P1) in eine Freigabeposition (P2) zu vergrößern, insbesondere in vertikaler Richtung,
- wobei der Aktivierungsmechanismus (300) einen Sensor (302) aufweist und ausgebildet ist, in Abhängigkeit des Sensorsignals die Vergrößerung und/oder die Verkleinerung des Abstands zwischen der Führungsschiene (100) und der Geflügeltierauflage (200) zu initiieren.

4. Handhabungsvorrichtung (1) nach mindestens einem der vorhergehenden Ansprüche,
**dadurch gekennzeichnet, dass** der Aktivierungsmechanismus (300) ausgebildet ist, einen Abstand zwischen der Führungsschiene (100) und der Geflügeltierauflage (200) von einer Einführposition (P0) in die Funktionsposition (P1) zu verkleinern, und/oder
**dadurch gekennzeichnet, dass** der Aktivierungsmechanismus (300) ausgebildet ist, einen Abstand zwischen der Führungsschiene (100) und der Geflügeltierauflage (200) von einer Freigabeposition (P2) in die Funktionsposition (P1) und/oder in die Einführposition (P0) zu verkleinern.

5. Handhabungsvorrichtung (1) nach mindestens einem der vorhergehenden Ansprüche,
**dadurch gekennzeichnet, dass** die Handhabungsvorrichtung (1) eine erste Funktionsvorrichtung (410) und vorzugsweise eine zweite Funktionsvorrichtung (420) aufweist.

6. Handhabungsvorrichtung (1) nach mindestens einem der vorhergehenden Ansprüche,
**dadurch gekennzeichnet, dass** der Aktivierungsmechanismus (300) ausgebildet ist, insbesondere in Abhängigkeit des Sensorsignals, mindestens eine Abstandsveränderung zwischen der Führungsschiene (100) und der Geflügeltierauflage (200) zu initiieren und mindestens die erste und/oder die zweite Funktionsvorrichtung (410) zu aktivieren.

7. Handhabungsvorrichtung (1) nach mindestens einem der vorhergehenden Ansprüche,
**dadurch gekennzeichnet, dass** die Handhabungsvorrichtung (1) und/oder die zweite Funktionsvorrichtung (420) eine Substanz-Bereitstellungsvorrichtung umfassen,
wobei vorzugsweise die zweite Funktionsvorrichtung (420) und/oder die Substanz-Bereitstellungsvorrichtung als modulare Austauscheinheit, insbesondere Einwegeinheit, ausgebildet ist bzw. sind.

8. Handhabungsvorrichtung (1) nach mindestens einem der vorhergehenden Ansprüche,
- **dadurch gekennzeichnet, dass** die Führungsschiene (100) im Wesentlichen horizontal ausgerichtet ist, und
- dass die zwei Führungsschenkel (110) gegenüberliegend angeordnet sind, und
- dass zwischen den zwei Führungsschenkeln (110) eine Geflügeltieraufnahme (120) gebildet ist, und
- dass die Führungsschenkel (110) an einem ersten Ende (101) der Führungsschiene (100) aufgeweitet und/oder abgeflacht und/oder abgerundet sind, und/oder
- **dadurch gekennzeichnet, dass** die Führungsschenkel (110) an einem zweiten Ende (102) der Führungsschiene (100) einen Anschlag (301) aufweisen, und/oder
- **dadurch gekennzeichnet, dass** zwischen den Führungsschenkeln (110) und/oder in der Geflügeltieraufnahme (120) ein, vorzugsweise flexibler, Niederhalter angeordnet ist.

9. Handhabungsvorrichtung (1) nach mindestens einem der vorhergehenden Ansprüche,
- **dadurch gekennzeichnet, dass** die Geflügeltierauflage (200) geflügeltier-ergonomisch geformt ist und einer Vertiefung (210) darin aufweist und einen Brustanschlag (211) aufweist, und/oder
- dass die Geflügeltierauflage (200) beweglich, insbesondere in vertikaler Richtung, beweglich zur Führungsschiene (100) angeordnet ist, wobei vorzugsweise die Geflügeltierauflage (200) ausschließlich in vertikaler Richtung beweglich zur Führungsschiene (100) angeordnet ist.

10. Handhabungsvorrichtung (1) nach mindestens einem der vorhergehenden Ansprüche,
- **dadurch gekennzeichnet, dass** die Handhabungsvorrichtung (1) ein mobiles Chassis aufweist, insbesondere ein Chassis mit Rollen, und
- dass ein zusätzlicher Aufbau (500) für eine Flügelimpfung vorgesehen ist, der eine Antriebsmechanik (510) aufweist, die ausgebildet ist, um eine Nadel Vor- und Zurückzubewegen, insbesondere innerhalb einer horizontal ausgerichteten Ebene.

11. Handhabungsvorrichtung (1) nach Anspruch 5 oder mindestens einem der vorhergehenden Ansprüche 6-10, soweit rückbezogen auf Anspruch 5,
- **dadurch gekennzeichnet, dass** die erste Funktionsvorrichtung (410) eine Nadelanordnung (411) umfasst, die vorzugsweise mindestens zwei Nadelgeber für jeweils eine, zwei oder mehrere Nadeln umfasst, wobei die Nadelgeber vorzugsweise symmetrisch zu einer Längsachse angeordnet und in einem Winkel zur Vertikalen angeordnet sind.

12. Handhabungsvorrichtung (1) nach Anspruch 5 oder mindestens einem der vorhergehenden Ansprüche 6-11, soweit rückbezogen auf Anspruch 5,
- **dadurch gekennzeichnet, dass** die zweite Funktionsvorrichtung (420) eine, vorzugsweise im wesentlichen horizontal angeordnete Nadel (421) aufweist, wobei die Nadel (421) vorzugsweise an der Führungsschiene (100), insbesondere an einem der zwei Führungsschenkel (110), angeordnet ist, und wobei die Nadel (421) vorzugsweise angeordnet ist, die Haut eines auf Geflügeltierauflage (200) aufgelegten Geflügeltieres, insbesondere im Bereich der Flügelinnenseite, zu punktieren.

13. Verfahren (1000) zur, insbesondere manuellen, Handhabung von Geflügeltieren, vorzugsweise in einer Handhabungsvorrichtung (1), insbesondere in einer Handhabungsvorrichtung (1) nach mindestens einem der vorhergehenden Ansprüche,
das Verfahren umfassend
- Einführen (1001) eines Geflügeltieres zwischen zwei Führungsschenkel (110) einer Führungsschiene (100) und Auflegen des Brustbereichs des Geflügeltieres auf eine Geflügeltierauflage (200),
- Vergrößern (1003) eines Abstands zwischen der Führungsschiene (100) und der Geflügeltierauflage (200) von einer Funktionsposition (P1) in eine Freigabeposition (P2), insbesondere in vertikaler Richtung, vorzugsweise mittels eines Aktivierungsmechanismus (300).

14. Verfahren (1000) nach dem vorhergehenden Anspruch,
- **dadurch gekennzeichnet, dass** beim Einführen (1001) des Geflügeltieres zwischen zwei Führungsschenkel (110) einer Führungsschiene (100) der Abstand zwischen der Führungsschiene (100) und der Geflügeltierauflage (200) einer Einführposition (P0) entspricht, und der Abstand zwischen der Führungsschiene (100) und der Geflügeltierauflage (200) nach dem Einführen des Geflügeltieres von der Einführposition (P0) auf die Funktionsposition (P1) verkleinert (1002) wird, insbesondere in Abhängigkeit eines Sensorsignals, und
- **dadurch gekennzeichnet, dass** vor dem Vergrößern (1003) des Abstands zwischen der Führungsschiene (100) und der Geflügeltierauflage (200) von der Funktionsposition (P1) in die Freigabeposition (P2) mindestens eine erste Funktionsvorrichtung aktiviert (1002) wird, und
- **gekennzeichnet durch** Austauschen (1005) der ersten Funktionsvorrichtung (410) und/oder einer zweiten Funktionsvorrichtung (420) und/oder einer Substanz-Bereitstellungsvorrichtung nach der Handhabung einer Vielzahl von Geflügeltieren, insbesondere einer Geflügelstallpopulation oder einer Geflügelstallteilpopulation, vorzugsweise als modulare Austauscheinheit, insbesondere Einwegeinheit.

15. Verwendung einer Handhabungsvorrichtung (1) nach mindestens einem der vorhergehenden Ansprüche 1-12 zur Handhabung von Geflügeltieren, vorzugsweise in oder vor einem Geflügelstall und/oder in einem Verfahren (1000) nach mindestens einem der beiden vorhergehenden Ansprüche.

## Claims

1. Handling device (1) for poultry animals, in particular for assisting manual handling of poultry animals, comprising
- a guide rail (100), extending between a first end (101) and a second end (102), with two guide legs (110),
- a poultry animal support (200) for placing the breast area of a poultry animal thereon,
**characterized by** an activation mechanism (300) which is designed to initiate a sequence of distance changes between the guide rail (100) and the poultry animal support (200), in particular in dependence of a sensor signal.

2. Handling device (1) according to the preceding claim, **characterized in that**
- the handling device (1) is free of transport devices for the, in particular fully or partially automatic, transport of poultry animals through the handling device (1), in particular from the first end (101) to the second end (102) and/or into the handling device (1) and/or out of the handling device (1).

3. Handling device (1) according to at least one of the preceding claims, **characterized in that**
- the activation mechanism (300) is designed to increase a distance between the guide rail (100) and the poultry animal support (200) from a functional position (P1) to a release position (P2), in particular in the vertical direction,
- wherein the activation mechanism (300) has a sensor (302) and is designed to initiate the increase and/or decrease of the distance between the guide rail (100) and the poultry animal support (200) in dependence of the sensor signal.

4. Handling device (1) according to at least one of the preceding claims, **characterized in that** the activation mechanism (300) is designed to reduce a distance between the guide rail (100) and the poultry animal support (200) from an insertion position (P0) to the functional position (P1), and/or **characterized in that** the activation mechanism (300) is designed to reduce a distance between the guide rail (100) and the poultry animal support (200) from a release position (P2) into the functional position (P1) and/or into the insertion position (P0).

5. Handling device (1) according to at least one of the preceding claims, **characterized in that** the handling device (1) has a first functional device (410) and preferably a second functional device (420).

6. Handling device (1) according to at least one of the preceding claims, **characterized in that** the activation mechanism (300) is designed, in particular in dependence of the sensor signal, to initiate at least one change in distance between the guide rail (100) and the poultry animal support (200) and to activate at least the first and/or the second functional device (410).

7. Handling device (1) according to at least one of the preceding claims, **characterized in that** the handling device (1) and/or the second functional device (420) comprise a substance provision device,
wherein preferably the second functional device (420) and/or the substance provision device is/are designed as a modular exchange unit, in particular a disposable unit.

8. Handling device (1) according to at least one of the preceding claims,
- **characterized in that** the guide rail (100) is aligned essentially horizontally, and
- that the two guide legs (110) are arranged opposite one another, and
- that a poultry animal holder (120) is formed between the two guide legs (110), and
- that the guide legs (110) are widened and/or flattened and/or rounded at a first end (101) of the guide rail (100), and/or
- **characterized in that** the guide legs (110) have a stop (301) at a second end (102) of the guide rail (100), and/or
- **characterized in that** a, preferably flexible, hold-down device is arranged between the guide legs (110) and/or in the poultry animal holder (120).

9. Handling device (1) according to at least one of the preceding claims,
- **characterized in that** the poultry support (200) is shaped to be ergonomic for poultry and has a recess (210) therein and a breast stop (211), and/or
- the poultry animal support (200) is arranged so as to be movable, in particular in the vertical direction, relative to the guide rail (100), wherein preferably the poultry support (200) is arranged so as to be movable exclusively in the vertical direction relative to the guide rail (100).

10. Handling device (1) according to at least one of the preceding claims,
- **characterized in that** the handling device (1) has a mobile chassis, in particular a chassis with rollers, and
- that an additional structure (500) is provided for a wing vaccination, which has a drive mechanism (510) which is designed to move a needle forwards and backwards, in particular within a horizontally aligned plane.

11. Handling device (1) according to claim 5 or at least one of the preceding claims 6-10, as far as related to claim 5,
- **characterized in that** the first functional device (410) comprises a needle arrangement (411), which preferably comprises at least two needle generators for one, two or more needles in each case, the needle generators preferably being arranged symmetrically with respect to a longitudinal axis and being arranged at an angle with respect to the vertical.

12. Handling device (1) according to claim 5 or at least one of the preceding claims 6-11, as far as related to claim 5,
- **characterized in that** the second functional device (420) has a needle (421) which is preferably arranged essentially horizontally, the needle (421) preferably being arranged on the guide rail (100), in particular on one of the two guide legs (110), and wherein the needle (421) is preferably arranged to puncture the skin of a poultry animal placed on the poultry animal support (200), in particular in the region of the inside of the wing.

13. Method (1000) for, in particular manual, handling of poultry animals, preferably in a handling device (1), in particular in a handling device (1) according to at least one of the preceding claims,
the method comprising
- Inserting (1001) a poultry animal between two guide legs (110) of a guide rail (100) and placing the breast area of the poultry animal on a poultry animal support (200),
- Increasing (1003) a distance between the guide rail (100) and the poultry animal support (200) from a functional position (P1) to a release position (P2), in particular in the vertical direction, preferably by means of an activation mechanism (300).

14. Method (1000) according to the preceding claim,
- **characterized in that** when the poultry animal is introduced (1001) between two guide legs (110) of a guide rail (100), the distance between the guide rail (100) and the poultry animal support (200) corresponds to an insertion position (P0), and the distance between the guide rail (100) and the poultry animal support (200) is reduced (1002) from the insertion position (P0) to the functional position (P1) after the poultry animal has been inserted, in particular in dependence of a sensor signal, and
- **characterized in that** before the distance between the guide rail (100) and the poultry animal support (200) is increased (1003) from the functional position (P1) to the release position (P2), at least one first functional device is activated (1002), and
- **characterized by** exchanging (1005) the first functional device (410) and/or a second functional device (420) and/or a substance provision device after handling a plurality of poultry animals, in particular a poultry house population or a poultry house subpopulation, preferably as a modular exchange unit, in particular a disposable unit.

15. Use of a handling device (1) according to at least one of the preceding claims 1-12 for handling poultry animals, preferably in or in front of a poultry house and/or in a method (1000) according to at least one of the preceding two claims.

## Revendications

1. Dispositif de manipulation (1) pour volailles, en particulier destiné à soutenir une manipulation manuelle de volailles, comprenant
- un rail de guidage (100) s'étendant entre une première extrémité (101) et une deuxième extrémité (102) avec deux branches de guidage (110),
- un support de volaille (200) destiné à poser la zone pectorale d'une volaille sur celui-ci,
**caractérisé par** un mécanisme d'activation (300), qui est réalisé pour, en particulier en fonction d'un signal de capteur, initier une suite de changements de distance entre le rail de guidage (100) et le support de volaille (200).

2. Dispositif de manipulation (1) selon la revendication précédente, **caractérisé en ce que**
- le dispositif de manipulation (1) est dépourvu d'équipements de transport destinés au transport, en particulier entièrement ou partiellement automatique, de volailles à travers le dispositif de manipulation (1), en particulier de la première extrémité (101) à la deuxième extrémité (102) et/ou entrant dans le dispositif de manipulation (1) et/ou sortant du dispositif de manipulation (1).

3. Dispositif de manipulation (1) selon au moins l'une quelconque des revendications précédentes, **caractérisé en ce que**
- le mécanisme d'activation (300) est réalisé pour augmenter une distance entre le rail de guidage (100) et le support de volaille (200) d'une position fonctionnelle (P1) à une position de libération (P2), en particulier dans la direction verticale,
- dans lequel le mécanisme d'activation (300) présente un capteur (302) et est réalisé pour, en fonction du signal de capteur, initier l'augmentation et/ou la diminution de la distance entre le rail de guidage (100) et le support de volaille (200).

4. Dispositif de manipulation (1) selon au moins l'une quelconque des revendications précédentes,
**caractérisé en ce que** le mécanisme d'activation (300) est réalisé pour diminuer une distance entre le rail de guidage (100) et le support de volaille (200) d'une position d'introduction (P0) à la position fonctionnelle (P1), et/ou
**caractérisé en ce que** le mécanisme d'activation (300) est réalisé pour diminuer une distance entre le rail de guidage (100) et le support de volaille (200) d'une position de libération (P2) à la position fonctionnelle (P1) et/ou à la position d'introduction (P0).

5. Dispositif de manipulation (1) selon au moins l'une quelconque des revendications précédentes,
**caractérisé en ce que** le dispositif de manipulation (1) présente un premier dispositif fonctionnel (410) et de préférence un deuxième dispositif fonctionnel (420).

6. Dispositif de manipulation (1) selon au moins l'une quelconque des revendications précédentes,
**caractérisé en ce que** le mécanisme d'activation (300) est réalisé pour, en particulier en fonction du signal de capteur, initier au moins un changement de distance entre le rail de guidage (100) et le support de volaille (200) et activer au moins le premier et/ou le deuxième dispositif fonctionnel (410).

7. Dispositif de manipulation (1) selon au moins l'une quelconque des revendications précédentes,
**caractérisé en ce que** le dispositif de manipulation (1) et/ou le deuxième dispositif fonctionnel (420) comprennent un dispositif de mise à disposition de substance,
dans lequel de préférence le deuxième dispositif fonctionnel (420) et/ou le dispositif de mise à disposition de substance est ou sont réalisé(s) sous forme d'unité de remplacement modulaire, en particulier d'unité à usage unique.

8. Dispositif de manipulation (1) selon au moins l'une quelconque des revendications précédentes,
- **caractérisé en ce que** le rail de guidage (100) est orienté sensiblement à l'horizontale, et
- **en ce que** les deux branches de guidage (110) sont agencées l'une en face de l'autre, et
- **en ce qu'**un logement de volaille (120) est formé entre les deux branches de guidage (110), et
- **en ce que** les branches de guidage (110) sont élargies et/ou aplaties et/ou arrondies à une première extrémité (101) du rail de guidage (100), et/ou
- **caractérisé en ce que** les branches de guidage (110) présentent une butée (301) à une deuxième extrémité (102) du rail de guidage (100), et/ou
- **caractérisé en ce qu'**un serre-flanc, de préférence flexible, est agencé entre les branches de guidage (110) et/ou dans le logement de volaille (120).

9. Dispositif de manipulation (1) selon au moins l'une quelconque des revendications précédentes,
- **caractérisé en ce que** le support de volaille (200) est formé de manière ergonomique pour les volailles et présente un évidement (210) à l'intérieur de celui-ci et présente une butée pectorale (211), et/ou
- **en ce que** le support de volaille (200) est agencé de manière mobile, en particulier dans la direction verticale, de manière mobile par rapport au rail de guidage (100), dans lequel de préférence le support de volaille (200) est agencé exclusivement dans la direction verticale de manière mobile par rapport au rail de guidage (100).

10. Dispositif de manipulation (1) selon au moins l'une quelconque des revendications précédentes,
- **caractérisé en ce que** le dispositif de manipulation (1) présente un châssis mobile, en particulier un châssis avec des roulettes, et
- **en ce qu'**une structure supplémentaire (500) est prévue pour une vaccination alaire, qui présente un mécanisme d'entraînement (510), qui est réalisé pour faire avancer et reculer une aiguille, en particulier à l'intérieur d'un plan orienté à l'horizontale.

11. Dispositif de manipulation (1) selon la revendication 5 ou au moins l'une quelconque des revendications précédentes 6-10, dans la mesure où elles se rapportent à la revendication 5,
- **caractérisé en ce que** le premier dispositif fonctionnel (410) comprend un ensemble aiguilles (411), qui comprend de préférence au moins deux distributeurs d'aiguilles pour respectivement une, deux ou plusieurs aiguilles, dans lequel les distributeurs d'aiguilles sont agencés de préférence de manière symétrique par rapport à un axe longitudinal et agencés selon un angle par rapport à la verticale.

12. Dispositif de manipulation (1) selon la revendication 5 ou au moins l'une quelconque des revendications précédentes 6-11, dans la mesure où elles se rapportent à la revendication 5,
- **caractérisé en ce que** le deuxième dispositif fonctionnel (420) présente une aiguille (421) agencée de préférence sensiblement à l'horizontale, dans lequel l'aiguille (421) est agencée de préférence au niveau du rail de guidage (100), en particulier au niveau d'une des deux branches de guidage (110), et dans lequel l'aiguille (421) est agencée de préférence pour percer la peau d'une volaille posée sur le support de volaille (200), en particulier dans la zone de la face intérieure des ailes.

13. Procédé (1000) destiné à la manipulation, en particulier manuelle, de volailles, de préférence dans un dispositif de manipulation (1), en particulier dans un dispositif de manipulation (1) selon au moins l'une quelconque des revendications précédentes,
le procédé comprenant
- l'introduction (1001) d'une volaille entre deux branches de guidage (110) d'un rail de guidage (100) et la pose de la zone pectorale de la volaille sur un support de volaille (200),
- l'augmentation (1003) d'une distance entre le rail de guidage (100) et le support de volaille (200) d'une position fonctionnelle (P1) à une position de libération (P2), en particulier dans la direction verticale, de préférence au moyen d'un mécanisme d'activation (300).

14. Procédé (1000) selon la revendication précédente,
- **caractérisé en ce que** lors de l'introduction (1001) de la volaille entre deux branches de guidage (110) d'un rail de guidage (100), la distance entre le rail de guidage (100) et le support de volaille (200) correspond à une position d'introduction (P0), et la distance entre le rail de guidage (100) et le support de volaille (200) est diminuée après l'introduction de la volaille de la position d'introduction (P0) à la position fonctionnelle (P1) (1002), en particulier en fonction d'un signal de capteur, et
- **caractérisé en ce qu'**avant l'augmentation (1003) de la distance entre le rail de guidage (100) et le support de volaille (200) de la position fonctionnelle (P1) à la position de libération (P2), au moins un premier dispositif fonctionnel est activé (1002), et
- **caractérisé par** le remplacement (1005) du premier dispositif fonctionnel (410) et/ou d'un deuxième dispositif fonctionnel (420) et/ou d'un dispositif de mise à disposition de substance après la manipulation d'une pluralité de volailles, en particulier d'une population de poulailler ou d'une population partielle de poulailler, de préférence sous forme d'unité de remplacement modulaire, en particulier d'unité à usage unique.

15. Utilisation d'un dispositif de manipulation (1) selon au moins l'une quelconque des revendications précédentes 1-12 destiné à la manipulation de volailles, de préférence dans ou devant un poulailler et/ou dans un procédé (1000) selon au moins l'une quelconque des deux revendications précédentes.
